# EUROPÄISCHE PATENTSCHRIFT

(11) **EP 0 590 410 B1**
(45) Veröffentlichungstag und Bekanntmachung des Hinweises auf die Patenterteilung: **02.05.1997**
(21) Anmeldenummer: 93114828.2
(22) Anmeldetag: 15.09.1993
(51) Int. Cl.: H02G 3/22

(54) **Vorrichtung zur Durchführung von Kabeln durch Schott- bzw. Schirmwände**
Device to pass cables through bulkheads or screens
Dispositif pour faire passer des câbles à travers des cloisons et des écrans

(30) Priorität: 29.09.1992 DE 4232571; 19.02.1993 DE 4305071
(43) Veröffentlichungstag der Anmeldung: 06.04.1994
(73) Patentinhaber: GÜNTHER KLEIN INDUSTRIEBEDARF GmbH, D-22926 Ahrensburg (DE)
(72) Erfinder: Kaufmann, Günther Klein, D-22559 Hamburg (DE); Loske, Ulrich, Dipl.-Ing., D-71112 Gärtringen (DE)
(74) Vertreter: Hansmann, Dierk, Dipl.-Ing.

(56) Entgegenhaltungen:
- EP-A- 0 058 876
- EP-A- 0 223 393
- EP-A- 0 223 615

## Beschreibung

Die Erfindung betrifft eine Vorrichtung zur Durchführung von Kabel in Schott- bzw. Schirmwänden mit elektrischer Kontaktierung zur Massung und Abschirmung des Kabelschirms (Siehe EP-A-0 223 615 und EP-A-0 058 876).

Es ist bekannt, Kabel, die durch Schirmwände und Schottwände wie sie z. B. auf Schiffen, in Kraftwerken, in Rechenzentren und dergleichen aus elektrotechnischen Gegebenheiten und/oder aus Sicherheitsgründen häufig vorkommen, mit Vorrichtungen wie Packsysteme, die aus mehreren Schottungsmodulen bestehen, in diesen Schott-bzw. Schirmwänden so zu halten, daß eine Abtrennung zwischen den beiden Bereichen außerhalb der Schottwand gegeben ist. Zum Teil werden von diesen Abtrennungen auch bestimmte wasser- und gasabdichtende Funktionen sowie flammhemmende Eigenschaften übernommen.

Bei der Verlegung von Kabeln, die mit einem oder mehreren Schirmen zur Ableitung von Störleistungen, hervorgerufen von elektrischen, magnetischen und/oder elektromagnetischen Feldern, ausgerüstet sind, ist es erforderlich bei Durchführungen der Kabel durch Schott- bzw. Schirmwände zur Massung des Kabelschirms eine Verbindung an einen potentialfreien Erdkontakt zur Ableitung der Störleistungen anzuschließen. Es bietet sich daher an, diese Kontaktierung des Kabelschirms mit einem Erdkontakt innerhalb eines Packsystems, das die Durchführung in einer Schott- bzw. Schirmwand darstellt, vorzunehmen. Die bekannten Systeme erreichen dies dadurch, daß im Bereich der Durchführung durch die Schott- bzw. Schirmwand das Kabel auf den beiden Außenseiten der Schottwand dichtend gehalten wird. Im inneren Bereich der Schottwand, zwischen den beiden Kabelfixierungen, wird auf eine Länge von mehreren Zentimetern der äußere Kabelmantel und ggf. noch weitere vorhandene Innenmäntel entfernt, so daß die Kabelschirme frei liegen. In diesen Innenraum wird zur Kontaktierung der Kabelschirme mit einem potentialfreien Erdkontakt eine Silbervergußmasse auf der Basis einer mit Silberpartikel hochgefüllten Kunstharzgießmasse eingebracht. Nach dem Aushärten dieser Silbervergußmasse soll somit eine funktionsfähige Kontaktierung der Kabelabschirmungen mit einem potentialfreien Erdkontakt sichergestellt werden.

Diese Systeme haben jedoch neben der bekannt ungünstigen elektrischen Leitfähigkeit von Silbervergußmassen im Vergleich zur reinen metallischen Leitfähigkeit noch mehrere gravierende Nachteile. So stellt dieses Vergußmassenprinzip schon allein aufgrund des hohen Silberanteils, der zum Einsatz kommt, eine sehr kostenaufwendige Lösung dar. Weiterhin ist in vielen Anwendungsfällen, insbesondere im Schiffbau mit zum Teil stark beengten Platzverhältnissen, das Ausgießen der Systeme mit der Silbervergußmasse problematisch. Ein weiterer, die Funktion des Systems betreffender gravierender Nachteil ist die Tatsache, daß Silbervergußmassen über die Zeit ihres Einsatzes verspröden können und infolge schwingender und wechselnder thermischer Beanspruchung zur Rißbildung neigen können, so daß nach längerer Einsatzdauer die Funktionssicherheit dieses Systems gefährdet ist. Ein weiterer nicht zu vernachlässigender Nachteil ist das Risiko das bei Silbervergußmassen bestehen kann, daß eine chemische Unverträglichkeit des Kunstharzgießmassensystems mit den Mantel- und den Isolationswerkstoffen des Kabels vorliegt, was wiederum zur Zerstörung des Kabels mit hohen Folgeschäden führen kann. Dies ist insbesondere dann gegeben, wenn Kabel und Silbervergußmasse von verschiedenen Herstellern nicht chemisch aufeinander abgestimmt sind.

Der Erfindung liegt daher vor allem die Aufgabe zu Grunde, eine Vorrichtung zur Durchführung von Kabel durch schirmende Gerätewände, Schirmräume und Schottwände so zu gestalten, daß eine elektrische Kontaktierung des oder der Kabelschirme ohne zu starke Verluste der Schirmwirkung unter Beibehaltung der bekannten kabelfixierenden und abdichtenden Funktionen dauerhaft sichergestellt ist.

Erfindungsgemäß wird diese Aufgabe durch die Merkmale des Anspruchs 1 gelöst. Die in einem Packsystem befindlichen Schottungsmodule - Elemente zur Befestigung von Kabeln in Durchführungen und zur Abdichtung dieser Durchführungen - sind mit einem Metallkissen, das besonders gut zur Kontaktierung von Schirmgeflechten auf Kabeln geeignet ist, derart ausgestattet, daß bei einfachster Montagehandhabung eine dauerhafte Kontaktierung zu dem oder den Kabelschirmen sichergestellt ist. Eine Ableitung von elektrischen Störleistungen erfolgt über eine Verbindungsklemme, die mit einer Kontaktfeder versehen ist. Das Metallkissen gewährleistet selbst bei hoher dynamischer Belastung des Systems durch Schwingungen der Kabel oder durch Schwingungen, die über die Schott- bzw. Schirmwände eingebracht werden, eine dauerhafte und funktionssichere Kontaktierung. Die Kontaktierung kann ohne das Auftrennen des als Geflecht ausgeführten Kabelschirms und ohne eine Erwärmung des Kabels, wie dies bei Lötverbindungen eintritt, erfolgen.

Die gute metallische Leitfähigkeit der aus einzelnen hochbeanspruchbaren Drähten hergestellten Metallkissen kann noch durch die Verwendung bestimmter Kupferlegierungen und/oder durch eine galvanische Oberflächenbeschichtung der einzelnen Drähte wie z.B. mit Zinn oder Silber verbessert werden. Gleichzeitig kann durch eine entsprechende galvanische Oberflächenbeschichtung ein ausgezeichneter und dauerhafter Korrosions- und Alterungsschutz des Metallkissens gegen aggressive Umgebungsbedingungen erreicht werden.

Die Form des Metallkissens läßt sich fertigungstechnisch so gestalten, daß eine optimale Anpassung an die jeweilige Kabelkontur sichergestellt ist und eine den verschiedenen Anforderungen an die Schirmwirkung ausreichende Oberflächenkontaktierung des Kabelschirms erreicht wird. So kann das Metallkissen z.B. so ausgeführt werden, daß eine Rundkontaktierung auf 360° des Kabelumfangs möglich ist.

Die Flexibilität des Metallkissens kann neben den verschiedenen geometrischen Formen auch in starkem Maß durch den verwendeten Drahtwerkstoff, den einzelnen Drahtdurchmesser und die Packungsdichte variiert werden. Somit ist sichergestellt, daß in Abhängigkeit des Kabeltyps und des Kabeldurchmessers über dem Schirm bei einem vorgegebenen Anpreßdruck eine genau definierte Federwirkung des Metallkissens gegeben ist, um bestimmte Maßtoleranzen des Kabels auszugleichen und trotz dieser Maßschwankungen eine dauerhafte Kontaktierung zu gewährleisten.

Die elastischen Eigenschaften des Metallkissens bleiben auch in einem hohen Temperaturbereich erhalten. So können mit diesen Metallkissen Temperaturbereiche von -90 °C bis +400 °C abgedeckt werden.

Die Verbindung des Metallkissens mit der Verbindungsklemme wird vorzugsweise durch einen Zentralkontakt als Lötverbindung hergestellt. Ein ringförmiges Metallkissen kann auch von innen über eine Punktschweißung mit der Verbindungsklemme verbunden sein. Somit ist immer eine widerstandsarme Ableitung der elektrischen Störleistungen gegeben.

Der Formkörper, der das Metallkissen umgibt, kann zum Beispiel aus einem thermoplastischen Kunststoff nach dem Spritzgußverfahren hergestellt werden. Somit ist eine wirtschaftliche und maßgenaue Herstellungsmöglichkeit gegeben. Als Werkstoff hierfür wird ein halogenfreier und flammwidriger Thermoplast eingesetzt, der ein hohes Maß an Funktionssicherheit im Brandfall garantiert. Dies ist besonders wichtig, da für die Kontaktierung des Kabelschirms der Außenmantel und ggf. auch weitere Innenmäntel des Kabels entfernt wurden. Durch den halogenfreien und flammwidrigen Modulwerkstoff kann dieser besonders gefährdete Kabelbereich auch im Brandfall über eine angemessene Zeit geschützt werden.

Die Schottungsmodule sind in ihren äußeren Abmessungen so bemessen, daß mehrere Moduleinheiten als Packsystem in einem vorzugsweise aus Stahl hergestellten Spannrahmen zusammengehalten werden können. Verschiedene Modulabmessungen für verschiedene Kabeldimensionen sind so aufeinander abgestimmt, daß eine kompakte Bauweise möglich ist. Die einzelnen Schottungsmodule haben untereinander über die, in die Verbindungsklemme eingearbeitete Kontaktfeder, eine gute elektrische Verbindung, so daß auf diese Weise elektrische Schirmströme direkt in den metallischen Spannrahmen oder in eine im Spannrahmen angeordnete Kontaktleiste abgeleitet werden können.

Weiterhin soll die Aufgabe gelöst werden, ein komplettes Packsystem, welches aus einem Spannrahmengehäuse, kabeltragenden Moduln, Füllmoduln, Verankerungsscheiben, Zwischenplatten, sowie einer Endabdichtung besteht, mit den gleichen verbesserten Abschirmeigenschaften für elektrische Ströme auf ein Erdpotential geschaffen werden. Weiterhin wird mit diesem Packsystem der in der Durchgangsfläche nicht mit Kabel belegte Bereich vollständig gegen hochfrequente elektromagnetische Störeinflüsse abgedichtet.

Nach einem weiteren Merkmal soll dazu die Endabdichtung aus einem mittig geteilten Kunststoffkörper bestehen, mit zwischen den Kunststoffkörperhälften angebrachtem und mit diesen z.B. durch Klebung verbundenen, einen Überstand gegenüber den darunterliegenden Moduln aufweisendes Metallkissen, auf dem der Spannschraube des Packsystems gegenüberliegend eine Stahlplatte mit einer umlaufenden hochflexiblen HF-Endabdichtung gelagert ist.

Weitere Merkmale des Packsystems sind aus den Unteransprüchen 10 bis 18 zu entnehmen.

An Hand der beiliegenden Zeichnungen soll die Erfindung nachfolgend noch näher erläutert werden. Auf den Zeichnungen zeigen
- Fig. 1a:: Seitenansicht einer oberen Schottungsmodulhälfte
- Fig. 1b:: Vorderansicht einer oberen Schottungsmodulhälfte

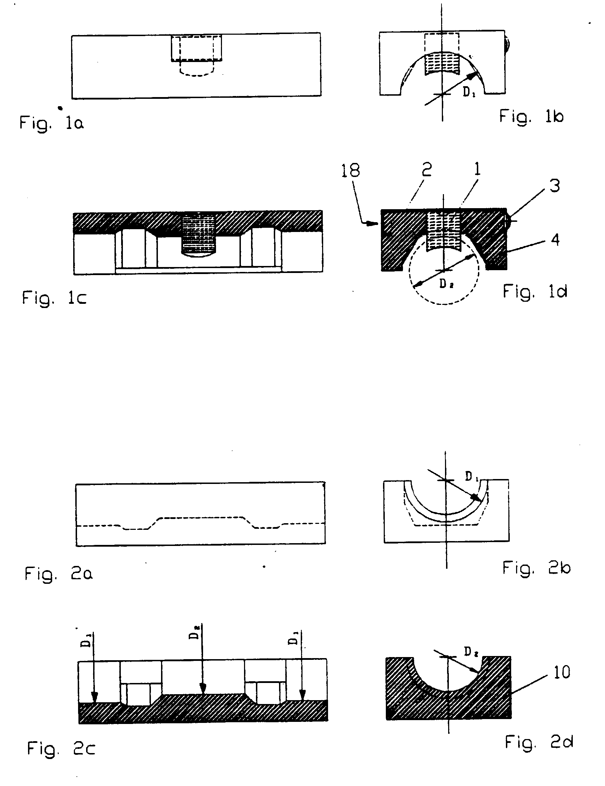

- Fig. 1c:: obere Schottungsmodulhälfte im Schnitt längs der Kabelachse
- Fig. 1d:: obere Schottungsmodulhälfte im Schnitt senkrecht zur Kabelachse
- Fig. 2a:: Seitenansicht einer unteren Schottungsmodulhälfte
- Fig. 2b:: Vorderansicht einer unteren Schottungsmodulhälfte
- Fig. 2c:: untere Schottungsmodulhälfte im Schnitt längs der Kabel achse
- Fig. 2d:: untere Schottungsmodulhälfte im Schnitt senkrecht zur Kabelachse
- Fig. 3:: oberes und unteres Schottungsmodul mit eingespanntem Kabel bei teilweiser Schirmkontaktierung
- Fig. 4:: oberes und unteres Schottungsmodul mit eingespanntem Kabel bei vollständiger Schirmkontaktierung (Rundumkontakt)
- Fig. 5:: Packsystem mit mehreren Schottungsmodulen
- Fig. 6:: ein Ausführungsbeispiel eines erfindungsgemäßen Packsystems im Schnitt
- Fig. 7:: den Kunststoffkörper der Endabdichtung in Seitenansicht.
- Fig. 8:: die beiden Kunststoffkörperhälften der Endabdichtung mit zwischen diesen eingelegtem Metallkissen
- Fig. 9:: einen Schnitt durch die Endabdichtung
- Fig. 10:: die Endabdichtung im Längsschnitt
- Fig. 11:: einen Schnitt durch die obere Hälfte eines kabeltragenden Moduls
- Fig. 12:: eine Draufsicht auf die untere Hälfte diese Moduls
- Fig. 13:: einen Schnitt durch das Metallkissen dieses Moduls
- Fig. 14:: einen Schnitt durch die obere Hälfte einer anderen Ausführungsform eines solchen Moduls
- Fig. 15:: einen Schnitt durch den Metallkissenteil dieses Moduls
- Fig. 16:: einen Schnitt durch die obere Hälfte einer weiteren Ausführungsform dieses Moduls
- Fig. 17:: einen Schnitt durch das Metallkissen des Moduls nach Fig. 16
- Fig. 18:: eine Verankerungsscheibe in Draufsicht
- Fig. 19:: die gleiche Verankerungsscheibe in Seitenansicht
- Fig. 20:: ein Detail dieser Verankerungsscheibe in vergrößerter Darstellung
- Fig. 21:: eine Zwischenplatte in Draufsicht
- Fig. 22:: einen Schnitt durch die Zwischenplatte in vergrößerter Darstellung

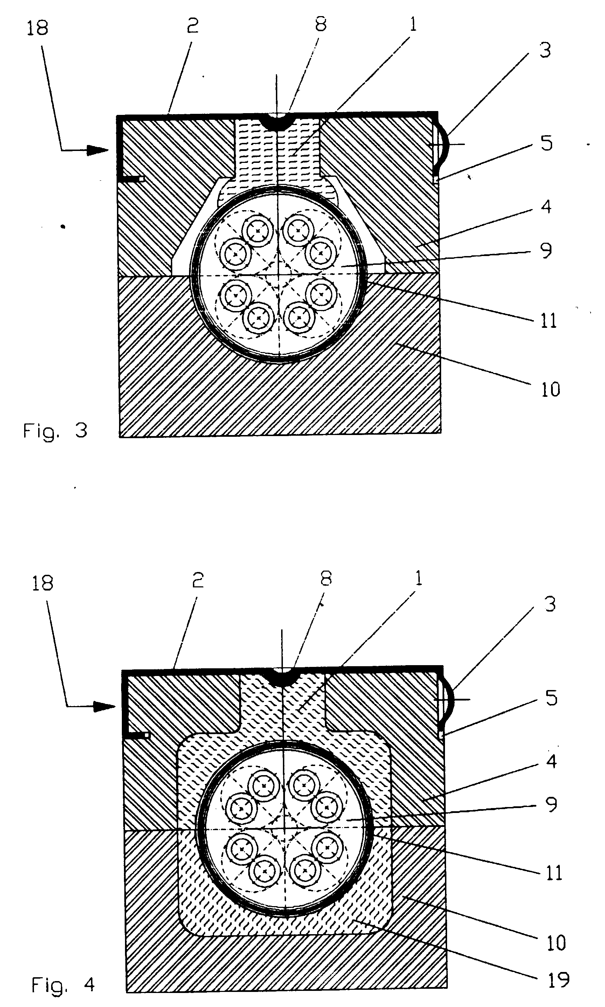

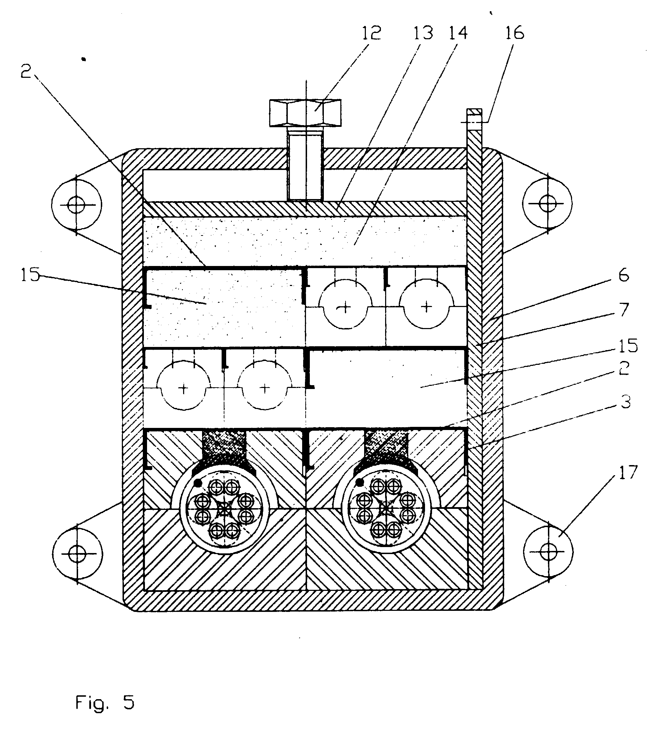

In den Figuren ld und 3 sind das Metallkissen, das sich im Zentrum der oberen Schottungsmodulhälfte befindet, mit 1 und die Verbindungsklemme mit 2 bezeichnet. Die Kontaktfeder 3 ist seitlich in die Verbindungsklemme 2 eingearbeitet. In dem Formkörper 4 der oberen Schottungsmodulhälfte ist für die Verbindungsklemme 2 und für die Kontaktfeder 3 eine Aussparung entsprechend den Abmessungen der Verbindungsklemme so vorgesehen, daß der Formkörper 4 und die Verbindungsklemme 2 einen konturgetreuen Abschluß bilden. Ebenfalls ist der Formkörper 4 im Bereich der Kontaktfeder 3 mit einer verlängerten Aussparung 5 (Fig.3) versehen, die es ermöglicht, daß die Kontaktfeder 3 bei seitlicher Anpressung des Schottungsmoduls gegen ein benachbartes Schottungsmodul oder die im Spannrahmen 6 seitlich eingelassene Kontaktleiste 7 in eingebautem Zustand im Packsystem (Fig.5) darin eintauchen kann. Der Zentralkontakt 8 zur Verbindung des Metallkissens 1 mit der Verbindungsklemme 2 ist in Fig.3 als Lötstelle abgebildet.

Der Außendurchmesser des im Schottungsmodul gehaltenen Kabel 9, das mit vier Aderpaaren dargestellt ist, ist mit D1 bezeichnet und stellt das Maß für die Ein- und Ausgangsöffnungen des oberen Formkörpers 4 und des unteren Formkörpers 10 dar. Im unteren Formkörper 10 ist bei nur teilweiser Schirmkontaktierung im Bereich gegenüber dem im oberen Formkörper 4 eingelassenen Metallkissen 1 eine Rundung mit dem Durchmesser D2 vorgesehen. Der Durchmesser D2 entspricht dem Durchmesser des Kabels 9 über dem Kabelschirm 11. Somit ist das Kabel 9 gegenüber dem Metallkissen 1 genau positioniert und wird durch die Anpressung über das Metallkissen 1 nicht deformiert.

In Fig.4 ist die Ausführung bei einer vollständigen Schirmkontaktierung (Rundumkontaktierung) dargestellt. Die Kontaktierung wird durch eine entsprechende Ausbildung des Metallkissens 1 in der oberen Schottungsmodulhälfte 4 und des Metallkissen 19 in der unteren Schottungsmodulhälfte 10 erreicht. Durch die Anpressung der beiden Schottungsmodulhälften über die Endabdichtung 13 und 14 und ein entsprechendes Übermaß in der Höhe der beiden Metallkissen 1 und 19 wird die Kontaktierung der Metallkissen untereinander sichergestellt.

In dem in Fig.5 vereinfacht dargestellten Packsystem sind mehrere Schottungsmodule verschiedener Größe - die beiden unteren Schottungsmodule sind im Schnitt dargestellt - zusammengefaßt, die mittels der Anpreßschraube 12 über eine Endabdichtung 13 und 14 zusammengepreßt werden. Die Endabdichtung ist in eine verwindungssteife Stahlplatte 13 und einen dauerelastischen Kunststoffblock 14 unterteilt. Der Kunststoffblock 14 besteht vorzugsweise aus dem gleichen halogenfreien und flammwidrigen thermoplastischen Kunststoff wie die beiden Formkörper 4 und 10.

Der Kontakt der Schottungsmodule im eingebauten Zustand wird dadurch sichergestellt, daß die Kontaktfeder 3 gegen die Fläche 18 durch Anpressung kontaktiert.

Wird ein Packsystem nicht in vollem Umfang mit Kabeln ausgelegt, so sind an diesen Leerstellen Füllmodule 15 eingesetzt. Die Füllmodule 15 sind ebenfalls mit einer Verbindungsklemme 2 in der eine Kontaktfeder 3 eingearbeitet ist, versehen. So ist sichergestellt, daß unabhängig von der Position des Schottungsmoduls im Packsystem die Ableitung der Schirmströme auch über die Füllmodule 15 auf die Kontaktleiste 7 erfolgen kann. Die Kontaktleiste 7 ist an ihrem Austritt aus dem Spannrahmen 6 mit einer Durchgangsbohrung 16 versehen. Hierrüber kann eine Verbindung zu einem potentialfreien Erdungskontakt immer dann hergestellt werden, wenn der Spannrahmen über die Befestigungspunkte 17 zum Beispiel in einem Mauerwerk verankert ist.

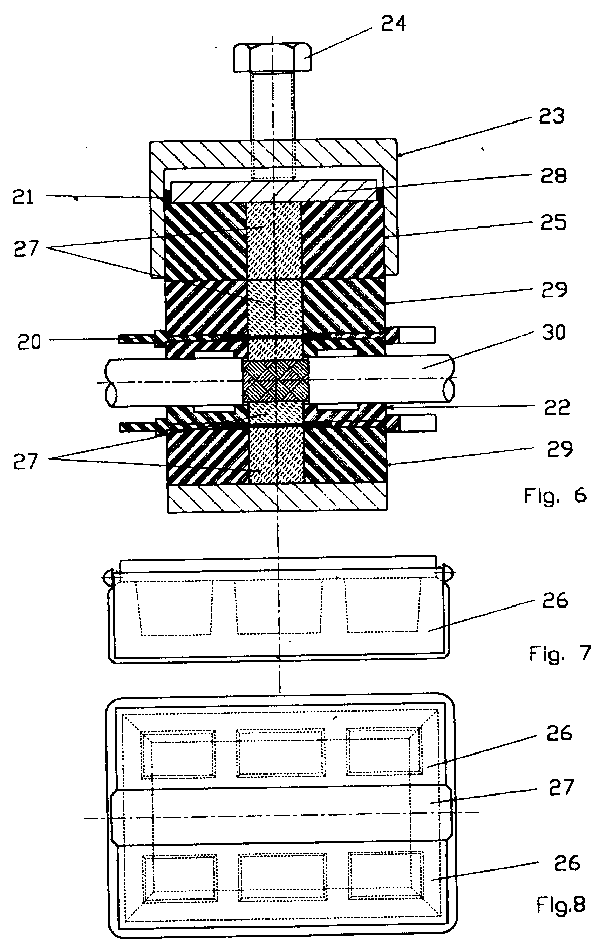

Wie Fig. 6 erkennen läßt, besteht das Packsystem aus dem Spannrahmengehäuse 23 mit der Spannschraube 24 für die Endabdichtung 25, die aus den Kunststoffkörpern 26 mit dem Metallkissen 27, der Stahlplatte 28 und der HF-Enddichtung 21 zusammengesetzt ist. In dem Spannrahmen 23 sind die Module 22 für die Durchführung der Kabel 30, die Füllmodule 29, die durch Verankerungsscheiben 20 im Spannrahmen fixiert sind, angeordnet. Bei der gezeigten Anordnung ist durch das Kontaktieren der Metallkissen 27 die gesamte Durchbruchstelle in der Schottwand für hochfrequente Strahlung abgedichtet. Die Flammwidrigkeit, Gas- und Wasserdichtigkeit usw. sind bei dem System gewährleistet.

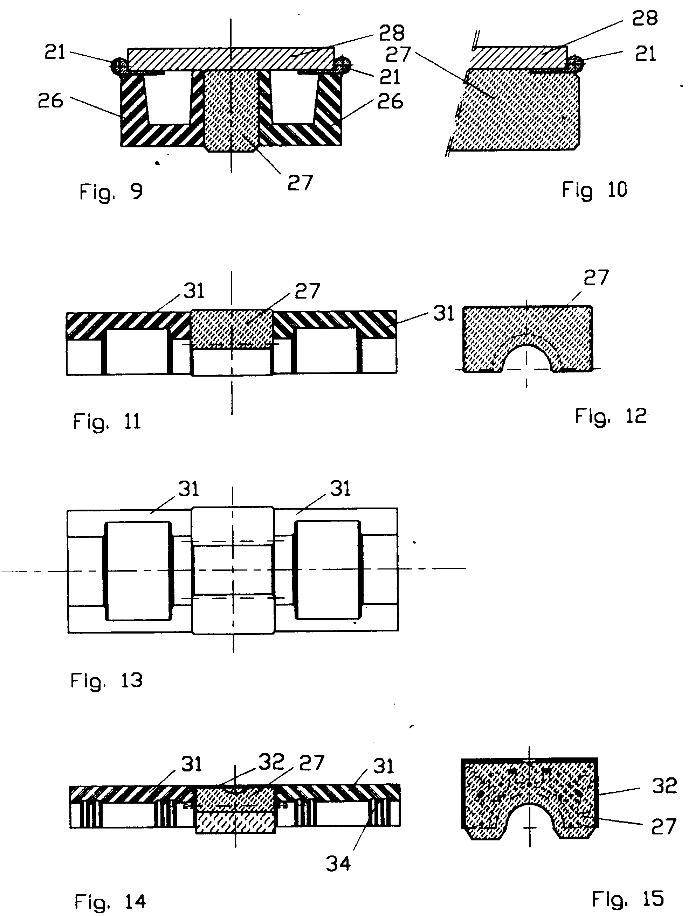

Von den einzelnen Elementen des Packsystems ist in den Figuren 7 bis 9 die Endabdichtung dargestellt, die im wesentlichen aus einem mittig geteilten Kunststoffkörper 26, einem zwischen den Körperhälften liegendem und z.B. durch Klebung mit diesen verbundenem Metallkissen 27 besteht. Man erkennt, daß das Metallkissen gegenüber den darunterliegenden Modulen einen Überstand von etwa 2 mm aufweist. Unter der Anpreßplatte 28 ist eine hochflexible HF-Dichtung 21 angebracht, wie insbesondere Fig. 9 und 10 erkennen lassen. dadurch wird sichergestellt, daß über den gesamten Spannrahmen in allen drei Achsen eine HF-Dichtigkeit gegeben ist. In den Figuren 11 bis 13 ist der obere Teil eines Moduls für die Kabeldurchführung dargestellt. Der untere Teil dieses Moduls würde entsprechend ausgebildet sein. In der dargestellten Modulhälfte ist das Metallkissen 27 so ausgebildet, daß im entlasteten Zustand die Kernbohrung z.B. 12 mm beträgt. Bei der Montage eines Kabels mit einem Außendurchmesser von z.B. 17 mm wird bei einem Durchmesser von ca. 15 mm über Geflecht eine ausreichende Anpressung des Metallkissens an das Kabelgeflecht erreicht.

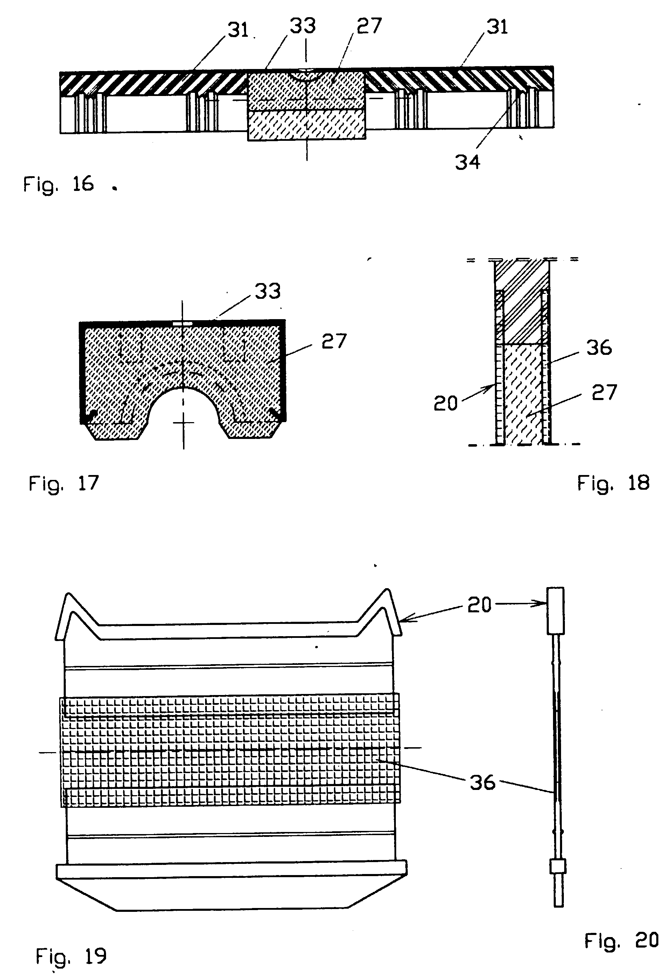

Die Fig. 14 bis 17 zeigen Varianten von Modulen für die Kabeldurchführung, insbes. für kleinere Modulabmessungen, für den Fall, daß dabei die Festigkeit der Klebestellen zwischen den Kunststoffkörpern und dem Metallkissen nicht ausreichend ist. Das Metallkissen 27 ist in den Fig. 14 und 15 in einem Käfig 32 angebracht und die Kunststoffkörper 31 sind, wie man erkennen kann, an diesen Käfig angespritzt. In den Fig. 16 und 17 überdeckt der Käfig 33 die Kunststoffkörper 31 und das Metallkissen 27 insgesamt. Man erkennt hier auch die Dichtrillen 34 für das durchgeführte Kabel.

Eine Verankerungsscheibe 20 für die Modulen im Spannrahmen zeigen die Fig. 19 bis 21. Man erkennt, daß die Verankerungsscheiben 20 mittig geteilt sind und die Teile mit einem Metallkissen untereinander verbunden sind. Die Befestigung der Kunststoffhälften mit dem Metallkissen wird dadurch erzielt, daß ein feinmaschiges Metallgewebe 36 in die beiden Kunststoffhälften eingepreßt wird.

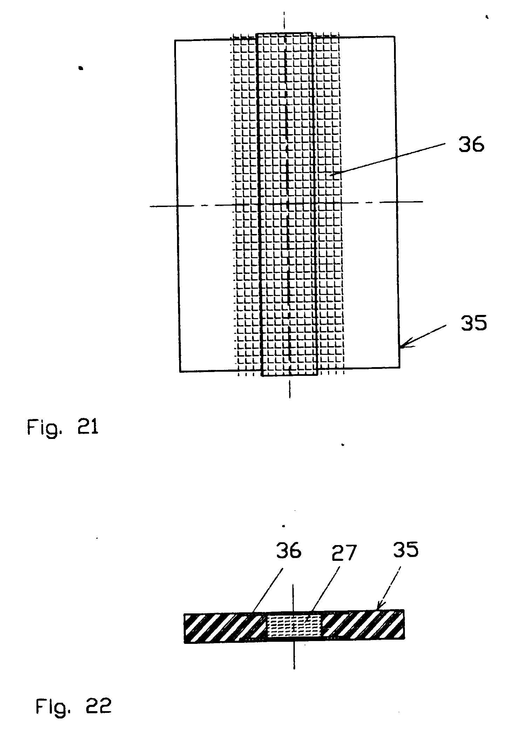

Entsprechend sind die Zwischenplatten 35 aufgebaut, wie die Fig. 21 und 22 erkennen lassen.

## Patentansprüche

1. Vorrichtung zur Durchführung von Kabel in Schott-bzw. Schirmwänden mit elektrischer Kontaktierung des Kabelschirms, dadurch gekennzeichnet, daß ein elastisches und elektrisch leitfähiges Metallkissen (1) einen dauerhaften und unterbrechungsfreien Kontakt zu dem oder den Kabelschirmen (11) herstellt und gegebenenfalls gemeinsam mit einer elektrisch leitenden Verbindungsklemme (2), die mit einer Kontaktfeder (3) versehen ist, elektrische Ströme der Abschirmung ebenfalls dauerhaft und störungsfrei auf ein Erdpotential ableitet (EMV,EMP).

2. Vorrichtung nach Anspruch 1, dadurch gekennzeichnet, daß das Metallkissen (1) aus einer Kupferlegierung mit verbesserter elektrischer Leitfähigkeit besteht.

3. Vorrichtung nach einem der Ansprüche 1 bis 2, dadurch gekennzeichnet, daß die Metalldrähte des Metallkissens (1) sowie die Verbindungsklemme (2) mit der Kontaktfeder (3) zur besseren elektrischen Leitfähigkeit mit einer hochleitenden Metallschicht wie z.B. Zinn, Silber oder Gold überzogen ist.

4. Vorrichtung nach einem der Ansprüche 1 bis 4, dadurch gekennzeichnet, daß das Metallkissen (1) in dem den oder die Schirme (11) des Kabels (9) berührenden Bereich der runden Kabelform angepaßt ist.

5. Vorrichtung nach einem der Ansprüche 1 bis 3, dadurch gekennzeichnet, daß das Metallkissen (1, 19) in der oberen und unteren Schottungsmodulhälfte (4, 10) so ausgebildet ist, daß der Schirm (11) des Kabels (9) auf 360° seines Umfangs Kontakt hat.

6. Vorrichtung nach einem der Ansprüche 1 bis 5, dadurch gekennzeichnet, daß das Metallkissen (1, 19) in seinem Drahtaufbau so ausgelegt ist, daß Maßänderungen im Durchmesser des Kabels über dem Schirm (D2) durch die dauerhafte Elastizität des Metallkissens ausgeglichen wird und die Kontaktierung des Schirms (11) dennoch vollständig erfüllt ist.

7. Vorrichtung nach einem der Ansprüche 1 bis 6, dadurch gekennzeichnet, daß die mechanische und elektrische Verbindung des Metallkissens (1) mit der Verbindungsklemme (2) durch einen gelöteten oder punktgeschweißten Zentralkontakt (8) hergestellt wird.

8. Vorrichtung nach Anspruch 1, dadurch gekennzeichnet, daß der Werkstoff für die Formkörper (4, 10), die das Metallkissen (1) und (19) umgeben, aus einem halogenfreien und flammwidrigen thermoplastischen Kunststoff bestehen und nach dem Spritzgießverfahren hergestellt sind.

9. Vorrichtung nach den Ansprüchen 1 und 8, dadurch gekennzeichnet, daß mehrere Schottungsmodule mit unterschiedlichen Kabelabmessungen als Packsystem mit modularem Abmessungsaufbau in einem metallischen Spannrahmen (6) gehalten werden und eine Kontaktierung der einzelnen Schottungsmodule über die Klemmfeder (3) mit der Kontaktfläche (18) des nebenliegenden Schottungsmoduls oder mit einer Kontaktleiste (7) im Spannrahmen erfolgt.

10. Vorrichtung nach Anspruch 9, dadurch gekennzeichnet, daß die Schottungsmodule (22, 23) für unterschiedliche Kabelabmessungen, sowie gegebenenfalls Verankerungsscheiben (20) und Zwischenplatten (35) mittels einer Endabdichtung (25) im Spannrahmen (23) gehalten sind.

11. Vorrichtung nach Anspruch 10, dadurch gekennzeichnet, daß die Endabdichtung (25) aus einem mittig geteilten Kunststoffkörper (26) mit zwischen den Kunststoffkörperhälften angbrachtem und mit diesen z.B. durch Klebung verbundenen, einen Überstand gegenüber den darunterliegenden Moduln (22, 29) aufweisendem Metallkissen (27) besteht, auf dem der Spannschraube des Packsystems gegenüberliegend eine Stahlplatte (28) mit einer umlaufenden hochflexiblen HF-Endabdichtung (21) gelagert ist.

12. Vorrichtung nach Anspruch 10 und 11, dadurch gekennzeichnet, daß die HF-Endabdichtung (21) aus einem zwischen das Spannrahmengehäuse (23) und die Stahlplatte (28) dichtend eingreifendem O-Ring-Teil und einem damit eine Einheit bildendem, zwischen der Stahlplatte und dem Kunststoffkörper gehaltenem flachen bandförmigem Befestigungsteil, der mit dem Kunststoffkörper z.B. durch Klebung verbunden ist, besteht.

13. Vorrichtung nach Anspruch 10 bis 12, dadurch gekennzeichnet, daß das Modul (22) für die Kabeldurchführung durch das Packsystem aus einem das Kabel (30) umschließenden Oberteil und einem davon getrennten spiegelbildlichen Unterteil, die aus geteilten Kunststoffkörpern (31) bestehen, deren Hälften z.B. durch Klebung mit einem die Konturen des Kunststoffkörpers (31) allseitig überragendem Metallkissen (27) verbunden sind.

14. Vorrichtung nach Anspruch 10 bis 13, dadurch gekennzeichnet, daß die im Spannrahmengehäuse (23) angeordneten Metallkissen (27) in Verbindung mit der Stahlplatte (28) und der HF-Endabdichtung (21) so ausgebildet sind, daß die gesamte nicht mit Kabel (30) belegte Durchgangsfläche in dem Spannrahmengehäuse (23) elektrisch gegen HF-Störungseinflüsse abgeschirmt ist.

15. Vorrichtung nach Anspruch 13, dadurch gekennzeichnet, daß das Metallkissen (27) in einem Metallkäfig (32) angeordnet ist, mit dem die Kunststoffkörper (31) z.B. durch Anspritzen verbunden sind.

16. Vorrichtung nach Anspruch 13, dadurch gekennzeichnet, daß das Metallkissen (27) und die Kunststoffkörper (31) in einem gemeinsamen Metallkäfig (33) angebracht sind.

17. Vorrichtung nach Anspruch 13 und 15 bis 16, dadurch gekennzeichnet, daß die Kunststoffkörper (31) kabelseitig mit Dichtlippen (34) versehen sind.

18. Vorrichtung nach Anspruch 13 und 15 bis 17, dadurch gekennzeichnet, daß die Verankerungsscheiben (20) und die Zwischenplatten (35) aus getrennten Teilen zusammengesetzt sind, zwischen denen ein Metallkissen (27) angebracht ist, das mit den aus Kunststoff bestehenden Scheiben- bzw. Plattenteilen durch in diese Teile eingepreßte feinmaschige Metallgewebelagen (36) verbunden ist

## Claims

1. Cable penetration device in partition or screening walls with electrical contacting of the cable shield, characterized in that an elastic and electrically conductive metal cushion (1) establishes permanent and uninterrupted contact with the cable shield or shields (11) and optionally jointly with an electrically conducting connecting terminal (2), which is provided with a contact spring (3), discharges electric currents of the screen likewise in a permanent and uninterrupted manner to an earth potential (EMV, EMP).

2. Device according to claim 1, characterized in that the metal cushion (1) is made of a copper alloy of improved electric conductivity.

3. Device according to one of claims 1 to 2, characterized in that, for improved electric conductivity, the metal wires of the metal cushion (1) as well as the connecting terminal (2) having the contact spring (3) is coated with a highly conductive metal layer such as, for example, tin, silver or gold.

4. Device according to one of claims 1 to 4, characterized in that the metal cushion (1), in the region in contact with the shield or shields (11) of the cable (9), is adapted to the round cable shape.

5. Device according to one of claims 1 to 3, characterized in that the metal cushion (1, 19) in the top and bottom partition module halves (4, 10) is so designed that the shield (11) of the cable (9) has contact over 360° of its periphery.

6. Device according to one of claims 1 to 5, characterized in that the metal cushion (1, 19) in terms of its wire structure is so designed that dimensional variations in the diameter of the cable above the shield (D2) is compensated by the permanent elasticity of the metal cushion and yet the contacting of the shield (11) is fully achieved.

7. Device according to one of claims 1 to 6, characterized in that the mechanical and electrical connection of the metal cushion (1) to the connecting terminal (2) is established by means of a soldered or spot-welded central contact (8).

8. Device according to claim 1, characterized in that the material for the mouldings (4, 10), which surround the metal cushion (1) and (19), are made of a halogen-free and flame-retardant thermoplastic material and are manufactured by injection moulding.

9. Device according to claims 1 and 8, characterized in that a plurality of partition modules having different cable dimensions are held as a pack system with a modular dimensional structure in a metal clamping frame (6) and contacting of the individual partition modules is effected by the clamping spring (3) with the contact surface (18) of the adjacent-lying partition module or with a contact strip (7) in the clamping frame.

10. Device according to claim 9, characterized in that the partition modules (22, 23) for different cable dimensions as well as, optionally, anchoring discs (20) and intermediate plates (35) are held by means of a sealing end (25) in the clamping frame (23).

11. Device according to claim 10, characterized in that the sealing end (25) comprises a centrally divided plastic element (26) having a metal cushion (27), which is provided between and connected, e.g. by gluing, to the plastic element halves and projects above the modules (22, 29) situated beneath and on which, opposite the clamping screw of the pack system, a steel plate (28) with a circumferential, highly flexible RF sealing end (21) is supported.

12. Device according to claim 10 and 11, characterized in that the RF sealing end (21) comprises an O-ring part, which engages sealingly between the clamping frame housing (23) and the steel plate (28), and, forming a unit therewith, a flat strip-like fastening part, which is held between the steel plate and the plastic element and is connected, e.g. by gluing, to the plastic element.

13. Device according to claim 10 to 12, characterized in that the module (22) for cable penetration through the pack system comprises a top part enclosing the cable (30) and a separate mirror-image bottom part, which parts comprise divided plastic elements (31), the halves of which are connected, e.g. by gluing, to a metal cushion (27) projecting on all sides above the contours of the plastic element (31).

14. Device according to claim 10 to 13, characterized in that the metal cushions (27), which are disposed in the clamping frame housing (23), in conjunction with the steel plate (28) and the RF sealing end (21) are so designed that the entire through-surface in the clamping frame housing (23) not occupied by cable (30) is electrically screened from RF interference influences.

15. Device according to claim 13, characterized in that the metal cushion (27) is disposed in a metal cage (32), to which the plastic elements (31) are connected, e.g. by injection-moulding thereon.

16. Device according to claim 13, characterized in that the metal cushion (27) and the plastic elements (31) are provided in a common metal cage (33).

17. Device according to claim 13 and 15 to 16, characterized in that the plastic elements (31) are provided at the cable side with sealing lips (34).

18. Device according to claim 13 and 15 to 17, characterized in that the anchoring discs (20) and the intermediate plates (35) comprise separate parts, between which is provided a metal cushion (27), which is connected to the plastic disc and plate parts by fine-meshed metal gauze inserts (36) which are pressed into said parts.

## Revendications

1. Dispositif destiné à faire passer du câble dans des cloisons ou dans des écrans, avec mise en contact électrique de l'enveloppe de protection du câble, caractérisé en ce qu'un coussin de métal élastique et conducteur de l'électricité (1) établit un contact permanent et exempt d'interruption avec la ou les enveloppes de protection (11) du câble, et éventuellement en commun avec une pince de fixation (2) conductrice de l'électricité, qui est munie d'un ressort de contact (3), fait dévier les courants électriques de la protection, de façon également permanente et exempte de perturbations, vers un potentiel de terre (EMV, EMP).

2. Dispositif suivant la revendication 1, caractérisé en ce que le coussin de métal (1) est fait d'un alliage de cuivre présentant une conductivité améliorée.

3. Dispositif selon l'une ou l'autre des revendications 1 et 2, caractérisé en ce que les fils de métal du coussin de métal (1) ainsi que la pince de fixation (2), avec le resort de contact (3) sont, de façon qu'ils présentent une meilleure conductivité, revêtus d'une couche de métal hautement conductive, telle que par exemple, une couche d'étain, d'argent ou d'or.

4. Dispositif suivant l'un quelconque des revendications 1 à 3, caractérisé en ce que le coussin de métal (1) est, dans la zone qui se trouve en contact avec la ou les enveloppes de protection (11) du câble (9), adapté à la forme ronde du câble.

5. Dispositif suivant l'un quelconque des revendications 1 à 3 , caractérisé en ce que le coussin de métal (1,19) a, dans la moitié supérieure (4) et dans la moitié inférieure (10) du module de cloisonnement, été prévu sous une forme telle que l'enveloppe de protection (11) du câble (9) soit en contact sur 360° de sa périphérie.

6. Dispositif suivant l'un quelconque des revendications 1 à 5, caractérisé en ce que le coussin de métal (1,19) a, en ce qui concerne sa composition en fils de métal, été conçu de telle façon que des variations de mesure suivant le diamètre du câble pris extérieurement à l'enveloppe de protection (diamètre D2) soient compensées du fait de l'élasticité permanente du coussin de métal et que la mise sous contact de l'enveloppe de protection (1) soit néanmoins assurée de façon complète et parfaite.

7. Dispositif suivant l'un quelconque des revendications 1 à 6, caractérisé en ce que la liaison mécanique et électrique du coussin de métal (1) à la pince de fixation (2) est assurée par un contact central (8) fixé par brasure ou par soudure par points.

8. Dispositif suivant la revendication 1, caractérisé en ce que la matière des éléments moulés (4,10), qui entourent le coussin de métal (1) et le coussin de métal (19), est constituée par une matière synthétique thermoplastique exempte d'halogènes et ignifuge et en ce que ces éléments moulés ont été fabriqués par le procédé de moulage par injection.

9. Dispositif suivant les revendications 1 et 8 caractérisé en ce que plusieurs modules de cloisonnement, pour des dimensions de câbles différentes, sont contenus sous forme d'ensemble en paquet de montage dimensionnel modulaire, dans un châssis de serrage métallique (6) et en ce qu'une mise sous contact des différents modules de cloisonnement est assurée par l'intermédiaire du ressort de serrage (3) avec la face de contact (18) du module de cloisonnement voisin ou avec une barre de contact (7) qui se trouve à l'intérieur du châssis de serrage.

10. Dispositif suivant la revendication 9, caractérisé en ce que
les modules de cloisonnement (22, 23) pour des dimensions de câbles différentes, ainsi qu'éventuellement, des plateaux d'ancrage (20) et des plaques intermédiaires (35), sont maintenus dans le châssis de serrage (23) à l'aide d'une fermeture d'extrémité (25).

11. Dispositif suivant la revendication 10, caractérisé par un élément de matière synthétique (26) divisé en son milieu, avec un coussin de métal (27) prévu entre les moitiés de l'élément de matière synthétique, fixé à ces moitiés , par exemple par
collage, et présentant une partie dépassante par rapport aux modules (22, 29) qui se trouvent en dessous de lui, coussin de métal (27) sur lequel est montée, en opposition à la vis de serrage de l'ensemble en paquet, une plaque d'acier (28), munie d'une fermeture d'extrémité périphérique HF fortement flexible (21).

12. Dispositif suivant les revendication 10 et 11, caractérisé en ce que la fermeture d'extrémité HF (21) est constituée par un élément de joint torique prévue en engagement d'étanchéité entre le logement du châssis de serrage (23) et la plaque d'acier (28), ainsi que par un élément de fixation plat sous forme de bande formant une unité avec l'élément de joint torique et maintenu entre la plaque d'acier et l'élément de matière synthétique, élément de fixation qui est fixé, par exemple par collage, à l'élément de matière synthétique.

13. Dispositif suivant les revendications 10 à 12, caractérisé en ce que le module (22) pour le passage du câble par l'ensemble en paquet est formé d'une partie supérieure, qui embrasse le câble (30), et d'une partie inférieure se présentant comme l'image énantiomorphe de la partie supérieure et distincte de celle-ci, parties qui sont formées par des éléments de matière synthétique, par exemple par collage, à un coussin de métal (27) qui dépasse de toutes parts les contours de l'élément de matière synthétique (31).

14. Dispositif suivant les revendications 10 à 13, caractérisé en ce que les coussins de métal (27) qui sont placés dans le logement des châssis de serrage (23), en liaison avec la plaque d'acier (28) et avec la fermeture d'extrémité HF (21), sont prévus sous une forme telle que l'ensemble de la surface de passage chargée du câble (30), dans le logement de châssis de serrage (23), soit protégé électriquement des influences perturbatrices de la HF.

15. Dispositif suivant la revendication 13, caractérisé en ce que le coussin de métal (27) est placé dans une cage de métal (32) à laquelle les éléments de matière synthétique (31) ont été fixés, par exemple par un procédé de fixation par injection.

16. Dispositif suivant la revendication 13, caractérisé en ce que le coussin de métal (27) et les éléments de matière synthétique (31) ont été placés dans une cage de métal commune (33).

17. Dispositif suivant la revendication 13 et les revendications 15 et 16, caractérisé en ce que les éléments de matière synthétique (31) ont été munis, côté câble, de lèvres d'étanchéité (34).

18. Dispositif suivant la revendication 13 et les revendications 15 à 17, caractérisé en ce que les plateaux d'ancrage (20) et les plaques intermédiaires (35) sont composés de parties distinctes entre lesquelles il a été placé un coussin de métal (27) qui a été fixé aux parties de plateaux et de plaques faits de matière synthétique à l'aide de couches de toile métallique (36), à mailles fines, pressées dans ces parties.
